# EUROPÄISCHE PATENTSCHRIFT

(11) **EP 2 174 776 B1**
(45) Veröffentlichungstag und Bekanntmachung des Hinweises auf die Patenterteilung: **16.11.2011**
(21) Anmeldenummer: 09169600.5
(22) Anmeldetag: 07.09.2009
(51) Int. Cl.: B32B 1/08

(54) **Brandschutzeinrichtung**
Flame-retardant device
Dispositif de protection contre l'incendie

(30) Priorität: 09.09.2008 AT 14012008
(43) Veröffentlichungstag der Anmeldung: 14.04.2010
(73) Patentinhaber: Mikl, Josef, 5020 Salzburg (AT)
(72) Erfinder: Mikl, Josef, 5020 Salzburg (AT)
(74) Vertreter: Babeluk, Michael

(56) Entgegenhaltungen:
- CH-A5- 606 896
- DE-A- 2 841 934
- DE-A1- 2 613 741
- DE-U1- 29 615 423
- US-A1- 2006 182 915

## Beschreibung

Die Erfindung betrifft eine Brandschutzeinrichtung für Einrichtungen wie Behälter, insbesondere Biertanks und Leitungen, mit einer Brandschutzfolie, die beabstandet von der Oberfläche der zu schützenden Einrichtung angeordnet ist, wobei der Zwischenraum zwischen Brandschutzfolie und Oberfläche der zu schützenden Einrichtung ausgeschäumt ist, sowie die Verwendung und ein Verfahren zur Errichtung einer Brandschutzeinrichtung, insbesondere an Biertanks.

Behälter, insbesondere Tanks in der Lebensmittelindustrie wie Biertanks, werden üblicherweise mit einer Dämmschicht versehen, wobei diese zumeist aus vorgefertigten Dämmstoffplatten besteht, die zugeschnitten und auf die Oberfläche der Tankwand aufgeklebt werden. Die dabei entstehenden Fugen zwischen den Dämmstoffplatten werden hierbei für gewöhnlich mit Klebemasse ausgefüllt. Um den Einfluss der Wasserdampfdiffusion zu verringern, wird zusätzlich auf die Oberfläche der Dämmstoffschicht eine Dampfbremse, vorzugsweise Aluminiumfolie, aufgebracht. Eine weitere Anforderung an die Dämmschicht ist, dass diese den umhüllten Behälter vor Feuer schützen soll. Dies wird beispielsweise dadurch erzielt, dass eine Brandschutzfolie auf die Dämmschicht aufgebracht wird.

In der DE 26 13 741 A1 sowie der DE 28 41 934 A1 wird jeweils ein wärmeisoliertes Leitungsrohr sowie ein Verfahren zu dessen Herstellung beschrieben, wobei auf dem Leitungsrohr Abstandshalter vorgesehen sind, eine Metallfolie beabstandet vom Leitungsrohr angeordnet ist, und der Zwischenraum zwischen Metallfolie und Leitungsrohr mit einem schwerentflammbaren Schaum auf Polyisocyanurat-Basis ausgeschäumt ist.

Die GB 2 409 812 A offenbart eine weitere Feuerbarriere, bestehend aus einer Vielzahl von Schichten, wobei der Kern des Schichtverbundes aus Aluminiumfolie und Papier gebildet ist, der von einer mit Graphit versetzten Polymermatrix, beispielsweise Polyurethan, umhüllt ist. Die äußerste Hülle dieser Feuerbarriere wird durch zwei Schichten von Glasfaserverbundstoffen oder eine dünnen Stahlschicht gebildet. Im Falle eines Brandes und der damit verbundenen Hitzeentwicklung bläht sich die mit Graphit angereicherte Polyurethan-Matrix auf, wobei das im Blähgraphit gespeicherte Wasser mit dem in der Polymermatrix befindliche Isocyanat reagiert und das dabei gebildete Kohlendioxid feuereindämmend wirkt.

In der EP 0 857 110 B1 wird ein passives Feuerschutzsystem für Leitungen offenbart, wobei zwischen einer Metallfolie und einem Glasfasermaterial aufblähbare Schichten, beispielsweise ein kohlenstoffhältiges Material, angeordnet ist.

In der DE 44 25 898 A1 wird ein Brandschutzlaminat beschrieben, wobei die Brandschutzschicht aus Glasfaser-, Steinwolle-Gewebe oder eine Filz- oder Stoffschicht mit einer Natriumsilikatlösung getränkt ist.

Die CH 606 896 A1 beschreibt eine aus mehreren Schichten aufgebaute, biegsame, wärmeisolierende Verkleidung mit einer Dampfsperre, einer wärmereflektierenden Schicht, einer Schicht aus wasserfestem und mit Mullgewebe verstärktem Faserstoff sowie einen dünnen geschlossenen Kunstharzfilm aus wetterbeständigem Halocarbon- und Acrylfilm, wobei die Metallschicht auf die Dampfsperre ausgedampft und sowohl mit dem Kunstharzfilm als auch mit dem Faserstoff in Verbindung steht.

Weitere Isolierungssysteme insbesondere für Rohrleitungen können auch der DE 296 15 423 U1 oder der US 2006/0182915 A1 entnommen werden.

Bei den bekannten Verfahren wird die Brandschutzfolie auf den Tank, bzw. der Dämmschicht mit Hilfe von Klebern wie beispielsweise Epoxydklebern aufgeklebt. Im Falle eines Brandes bläht sich diese Folie jedoch auf und beginnt zu reißen, so dass die darunter liegende Dämmschicht dem Feuer ausgesetzt wird.

Es ist daher Aufgabe der Erfindung, eine Brandschutzeinrichtung sowie ein Verfahren zur Errichtung einer derartigen Brandschutzbarriere zur Verfügung zu stellen, die die oben genannten Nachteile des Standes der Technik vermeiden.

Diese Aufgabe wird erfindungsgemäß durch eine Brandschutzeinrichtung für beispielsweise Behälter dadurch gelöst, dass eine Brandschutzfolie vorgesehen ist, die beabstandet von der Oberfläche der zu schützenden Einrichtung angeordnet ist, wobei der Zwischenraum zwischen Brandschutzfolie und Oberfläche der zu schützenden Einrichtung ausgeschäumt ist. Der in dem Zwischenraum befindliche Hartschaum fungiert einerseits als Dämmmaterial und verbindet bzw. verklebt sich andererseits mit der Oberfläche der Brandschutzfolie, so dass aufgrund des fugenlosen Aufbaues dieser Dämmschicht ein Reißen der Brandschutzfolie, beispielsweise durch Hitzeeinwirkung, verhindert wird. Des Weiteren ist die Dämmwirkung dieser Brandschutzeinrichtung deutlich besser gegenüber jener von üblichen Dämmplatten. Um eine Beschädigung der Brandschutzfolie, insbesondere durch mechanische Einwirkung, zu verhindern, ist zudem eine zusätzliche mechanisch stabile Außenverkleidung vorgesehen. Diese zumeist plattenförmige Außenverkleidung aus Metall oder Kunststoff wird hierbei beispielsweise an einem den Behälterumfang umschließenden Befestigungselement angebracht, um eine direkte Verbindung der Außenverkleidung mit der Oberfläche der zu schützenden Einrichtung sowie eine Verletzung der Brandschutzfolie zu vermeiden.

Erfindungsgemäß ist die Brandschutzfolie aus einem flexiblen Trägermaterial, beispielsweise aus Polyethylen oder Polyester, aber auch anorganische Träger wie beispielsweise silikathältige Gewebe, aus einer Aluminiumfolie als Dampfsperre, sowie einer Schicht aus bei Hitzeeinwirkung expandierendem Graphit als Schaumbildner gefertigt. Der Schaumbildner ist hierbei vorteilhafterweise der Behälteroberfläche und damit der Dämmschicht zugewandt. Das Graphit wird mittels eines Klebers auf der Aluminiumfolie aufgebracht, wobei der Kleber maximal 5% bis 10% der Schaumbildnerschicht ausmacht. Bei Hitzeeinwirkung ab etwa 160°C bildet diese Schicht einen nicht-brennbaren Schaum, der üblicherweise das bis zu zweihundert- bis dreihundertfache Volumen des ursprünglichen Schichtvolumens aufweist. Das flexible Trägermaterial verbrennt hierbei, während die als Dampfsperre fungierende Aluminiumfolie schmilzt bzw. reißt, so dass der Graphitschaum dem Feuer ausgesetzt ist und derart die Dämmschicht des Behälters schützt. Diese spezielle Brandschutzfolie hat zudem den Vorteil, dass sie neben ihrer brandschützenden Wirkung gleichzeitig als Dampfsperre fungiert, so dass zur Errichtung der erfindungsgemäßen Brandschutzeinrichtung lediglich eine Folie benötigt wird.

Um eine gleichmäßige Dämmschicht zu erhalten, ist vorgesehen, dass zwischen der Brandschutzfolie und der Oberfläche der zu schützenden Einrichtung eine Vielzahl von Distanzelementen in im Wesentlichen regelmäßigen Abständen angeordnet sind.

Bevorzugterweise sind hierbei die Distanzelemente aus dem selben Hartschaum vorgefertigt, aus dem auch die zwischen Brandschutzfolie und Behälteroberfläche befindliche Dämmschicht gefertigt ist. Besonders bevorzugt ist hierbei die Verwendung eines Hartschaums aus Polyurethan (PUR) oder Polyisocyanurat (PIR).

In einer bevorzugten Ausführung der Erfindung ist zusätzlich zu der zumindest einen Brandschutzfolie zumindest eine weitere Folie vorgesehen, die zwischen Brandschutzfolie und zu schützender Einrichtung angeordnet ist. Diese Folie fungiert insbesondere als (zusätzliche) Dampfsperre.

Diese Brandschutzeinrichtung ist insbesondere für Verwendung als Verkleidung von Einrichtungen wie Behälter, insbesondere Biertanks, Leitungen und dergleichen geeignet.

Die Aufgabe wird insbesondere auch durch ein Verfahren zur Errichtung einer Brandschutzeinrichtung insbesondere für Biertanks gelöst, wobei folgende Schritte vorgesehen sind:
a. Anbringen einer Vielzahl von Distanzstücken auf die Oberfläche der zu schützenden Einrichtung,
b. zumindest teilweises Umhüllen der zu schützenden Einrichtung mit zumindest einer Brandschutzfolie, und
c. Einbringen eines Hartschaums zwischen Oberfläche der zu schützenden Einrichtung und Brandschutzfolie,
d. Anbringen einer zusätzlichen mechanisch stabilen Außenverkleidung,
wobei die Brandschutzfolie aus einem flexiblen Trägermaterial, einer Aluminiumfolie als Dampfsperre sowie einer Schicht aus bei Hitzeeinwirkung expandierendem Graphit als Schaumbildner gefertigt ist, wobei die Schaumbildnerschicht der Behälteroberfläche zugewandt angeordnet wird.

Zusätzlich ist vorgesehen, dass eine mechanisch stabile Außenverkleidung angebracht wird, wobei bevorzugterweise zumindest ein Befestigungselement zur Befestigung der Außenverkleidung vorgesehen ist.

Der Hartschaum wird hierbei vor Ort nach Anbringen der Brandschutzfolie zwischen zu schützender Oberfläche und Brandschutzfolie eingespritzt, so dass eine Bildung von Spalten oder Fehlstellen und damit verbunden eine verringerte Dämmleistung vermieden wird. Des weiteren wird die Brandschutzfolie direkt mit der Dämmschicht verklebt, so dass eine bestmögliche Haftung der Brandschutzfolie an der Dämmschicht gewährleistet ist.

In einer bevorzugten Ausführung der Erfindung sind die Distanzstücke aus einem vorgeformten Hartschaum, insbesondere aus Polyurethan oder Polyisocyanurat, gefertigt und werden in regelmäßigen Abständen auf die Behälteroberfläche aufgebracht, insbesondere geklebt. Mit Hilfe dieser Distanzelemente wird ein gleichmäßiger Abstand zwischen Brandschutzfolie und Oberfläche gewährleistet.

Um einen gleichmäßigen, spaltenfreien Aufbau der Dämmschicht zu erhalten, werden für die Außenverkleidung plattenförmige, aus Metall oder stabilem Kunststoff gefertigte Verkleidungselemente eingesetzt.

Diese Verkleidungsplatten fungieren als zusätzliche Stabilisationsmaßnahme beim Einspritzen des Hartschaums zwischen Brandschutzfolie und Oberfläche der zu schützenden Einrichtung, wobei vorteilhafterweise zunächst ein Teil der Verkleidungsplatten beispielsweise auf dem Behälter aufgebracht wird, anschließend Hartschaum in den Zwischenraum zwischen Brandschutzfolie und Oberfläche der zu schützenden Einrichtung eingespritzt wird, und nach dessen Aushärtung weitere Verkleidungsplatten angebracht werden. Nachfolgend wird wiederum Hartschaum in den Zwischenraum eingefüllt. Durch diesen schrittweisen Aufbau der Dämmschicht wird eine besonders gleichmäßige Dämmung und gleichzeitig eine unterbrechungsfreie Befestigung, insbesondere Verklebung der Brandschutzfolie auf der Dämmschicht erzielt.

Im Folgenden wird anhand eines nicht-einschränkenden Ausführungsbeispiels mit zugehörigen Figuren die Erfindung näher erläutert. Darin zeigen:

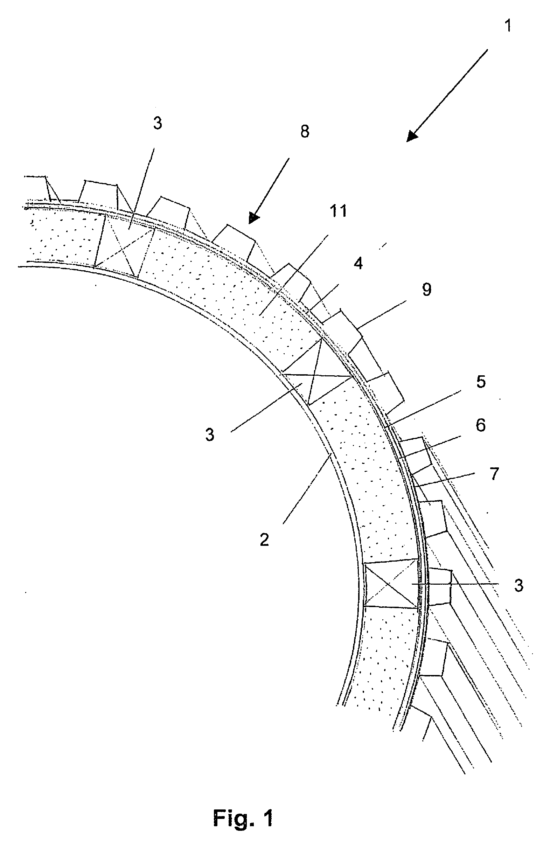

- Fig. 1: eine perspektivische Schnittansicht der erfindungsgemäßen Brand- schutzeinrichtung; und

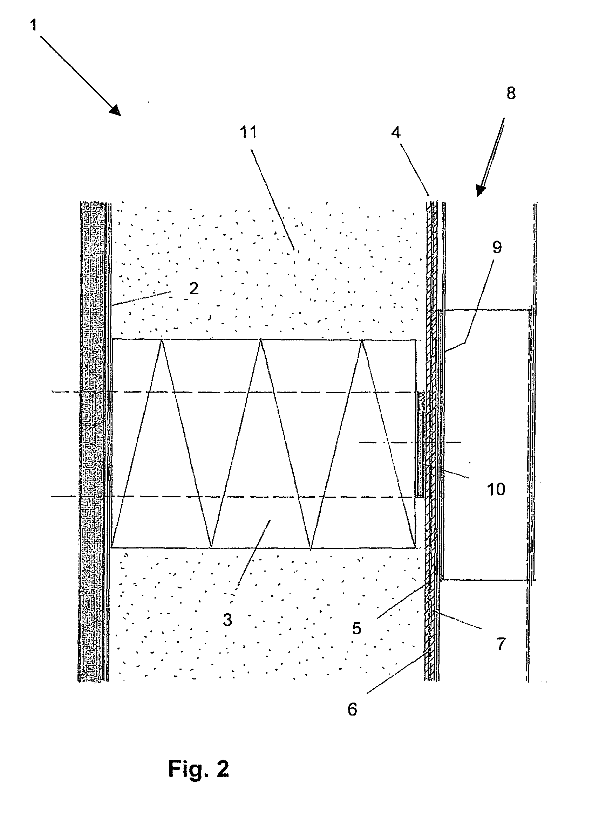

- Fig. 2: einen Ausschnitt eines schematischen Querschnitts durch die Brandschutzeinrichtung im Detail.

In den Figuren ist eine Brandschutzeinrichtung 1 auf einem Behälter 2, im vorliegenden Beispiel ein Biertank dargestellt, wobei auf der Tankaußenseite Distanzelemente 3 aufgeklebt sind. Diese Distanzelemente 3 sind üblicherweise aus einem Hartschaum wie beispielsweise Polyurethan gefertigt, und sind zum Beispiel würfelförmig ausgestaltet. Die Würfelkante beträgt beispielsweise 8 cm bis 10 cm; es versteht sich jedoch, dass auch andere Maße oder andere Formen als die Würfelform zum Einsatz kommen können. Ebenso können die Distanzelemente 3 aus einem anderen Material wie Metall, stabilem Kunststoff oder ähnlichem hergestellt sein.

Über die Distanzelemente 3 ist ein Brandschutzfolie 4 angeordnet, die den Behälter 2 im Wesentlichen umhüllt. Die Brandschutzfolie 4 besteht aus drei Schichten, wobei eine erste Schicht von Schaumschichtbildner 5 der Behälteroberfläche zugewandt ist. Daran schließt eine Dampfsperre 6 an, bevorzugt in Form einer Aluminiumfolie. Um der Brandschutzfolie 4 die erforderliche Stabilität zu verleihen, ist schließlich noch ein flexibles Trägermaterial 7 vorgesehen. Dieser aus Kunststoff, insbesondere aus PE oder aus PET hergestellte Träger 7 verhindert insbesondere beim Anbringen der Brandschutzfolie 4 eine Beschädigung derselben. Die Gesamtdicke der Brandschutzfolie 4 beträgt üblicherweise 1 mm bis 10 mm, vorzugsweise 2 mm bis 6 mm.

Da die Brandschutzfolie 4 gegenüber mechanischer Beanspruchung nicht sehr stabil ist, wird üblicherweise eine Außenabdeckung 8 auch aus ästhetischen Gründen zusätzlich angebracht. Diese Außenabdeckung 8 besteht hier aus Verkleidungsplatten 9 aus Metall, beispielsweise Stahl. Um eine spaltlose Außenverkleidung 8 zu erhalten, sind beispielsweise die Verkleidungsplatten 9 an ihren Rändern abgesetzt, sodass benachbarte Platten 9 einander überlappen. Selbstverständlich können auch andere Maßnahmen, wie zum Beispiel ein Nut-und-Feder-System, zum Erzielen einer nahezu spaltfreien Außenabdeckung 8 zum Einsatz kommen.

Die Befestigung der Verkleidungsplatten 9 erfolgt vorteilhafterweise über ein Befestigungselement 10, wobei bevorzugt die Platten 9 daran angeschraubt oder angenietet werden, um nicht die Behälteroberfläche zu beschädigen. Als Befestigungselemente 10 fungieren insbesondere Metallelemente, bevorzugterweise Aluminiumreifen, die den Behälter 2 in seinem Umfang in regelmäßigen Abständen umspannen, und an die die Verkleidungsplatten 9 angebracht werden.

Der Zwischenraum zwischen Brandschutzfolie 4 und Oberfläche des Behälters 2 ist mit einem Hartschaum 11 aufgefüllt, der gute Dämmeigenschaften aufweist.

Im Falle eines Brandes bläht sich aufgrund der Hitzeeinwirkung die Schaumbildnerschicht 5 ab etwa 160°C auf, während die dem Feuer zugewandte Trägerschicht 7 sowie die Dampfsperre 6 schmelzen bzw. verbrennen. Die so gebildete Graphitschicht entzieht durch Verbrennung des Kohlenstoffes der Umgebung Sauerstoff und bildet dabei Kohlenmonoxid und -dioxid, wodurch die Flammen erstickt werden und dadurch die Dämmschicht aus Hartschaum 11 für zumindest 30 min und länger dem Feuer widersteht.

Die erfindungsgemäße Brandschutzeinrichtung 1 wird folgendermaßen errichtet: An einem bereits installierten Behälter 2 werden in Abständen von etwa 20 cm bis 30 cm Distanzelemente 3 aufgeklebt und anschließend die oben beschriebene Brandschutzfolie 4 aufgebracht. Danach werden die Befestigungselemente 10 angebracht, wobei vorteilhafterweise die Befestigungselemente 10 in der Form von Aluminiumreifen mit einer Breite von beispielsweise 5 cm auf den Distanzelementen 3 bzw. der Brandschutzfolie 4 zu liegen kommen, und anschließend eine erste Lage (Reihe) an Verkleidungsplatten 9 befestigt. Beim Befestigen der Außenverkleidung 8 wird zwar im Bereich der Befestigungselemente 10 die Brandschutzfolie 4 durchbohrt, Untersuchungen des Anmelders haben jedoch ergeben, dass dies keinen messbaren Einfluss auf die Brandschutzeigenschaften und der Wirkung als Dampfsperre der erfindungsgemäßen Brandschutzeinrichtung 1 hat.

Nun wird eine erste Schicht Hartschaum 11 im Wesentlichen im Bereich der Verkleidungsplatten 9 zwischen Brandschutzfolie 4 und Behälter 2 eingespritzt und ausgehärtet. Die Verkleidungsplatten 9 dienen hierbei zusätzlich der Stabilisierung der Brandschutzfolie 4, damit diese nicht beim Einspritzen des flüssigen, noch nicht ausgehärteten Hartschaums 11 reißt.

Nach dem Aushärten des Ortschaums 11 wird anschließend an die erste Lage eine zweite Lage Verkleidungsplatten 9 angebracht und wiederum hinterschäumt. Dies wird solange wiederholt, bis der Behälter 2 zur Gänze mit Hartschaum 11 umhüllt und mit der Außenverkleidung 8 bedeckt ist. Durch das schrittweise Ausschäumen des Zwischenraums zwischen Brandschutzfolie 4 und Behälter 2 wird eine gleichmäßige, hohlraumfreie Hartschaumschicht 11 erhalten.

Es versteht sich, dass die erfindungsgemäße Bandschutzeinrichtung nicht nur an Behältern wie Biertanks eingesetzt werden kann. Sie ist überall dort verwendbar, wo eine Einrichtung oder Gebäudebereiche zum Schutz gegenüber Feuer und Hitzeeinwirkung zum Teil oder zur Gänze abgedeckt werden sollen. Wesentlich an der Erfindung ist, dass die Brandschutzfolie mit dem Hartschaum verklebt ist, sodass keine partielle Ablösung der Brandschutzfolie auftreten kann, was die Wirkung der Brandschutzeinrichtung wesentlich verringern würde. Des Weiteren fungiert die Brandschutzeinrichtung neben ihrer Schutzwirkung gegen Feuer auch als Dampfsperre und als (Dämm)Material, was ihren Einsatz insbesondere in der Lebensmittelindustrie bei dem Transport und der Lagerung von festen, flüssigen oder gasförmigen Stoffen besonders attraktiv macht.

## Patentansprüche

1. Brandschutzeinrichtung (1) für Einrichtungen wie Behälter (2), insbesondere Biertanks, sowie Leitungen mit einer Brandschutzfolie (4), die beabstandet von der Oberfläche der zu schützenden Einrichtung angeordnet ist, wobei der Zwischenraum zwischen Brandschutzfolie (4) und Oberfläche der zu schützenden Einrichtung ausgeschäumt ist, sowie zusätzlich eine mechanisch stabile Außenverkleidung (8) vorgesehen ist, **dadurch gekennzeichnet, dass** die Brandschutzfolie (4) einen flexiblen Träger (7), eine Dampfsperre (6) sowie eine Schicht (5) aus bei Hitze expandierendem Material aufweist.

2. Brandschutzeinrichtung (1) nach Anspruch 1, **dadurch gekennzeichnet, dass** der Träger (7) aus Polyethylen oder Polyester gefertigt ist, die Dampfsperre (6) eine Aluminiumfolie und die bei Hitzeeinwirkung expandierende Schicht (5) aus expandierendem Graphit besteht.

3. Brandschutzeinrichtung (1) nach Anspruch 1 oder 2, **dadurch gekennzeichnet, dass** die bei Hitzeeinwirkung expandierende Schicht (5) der Oberfläche der zu schützenden Einrichtung zugewandt ist.

4. Brandschutzeinrichtung (1) nach einem der Ansprüche 1 bis 3, **dadurch gekennzeichnet, dass** zusätzlich zu der zumindest einen Brandschutzfolie (4) zumindest eine weitere Folie vorgesehen ist, die zwischen Brandschutzfolie (4) und zu schützender Einrichtung angeordnet ist.

5. Brandschutzeinrichtung (1) einem der Ansprüche 1 bis 4, **dadurch gekennzeichnet, dass** zwischen Brandschutzfolie (4) und Oberfläche der zu schützenden Einrichtung eine Vielzahl von in im Wesentlichen regelmäßigen Abständen angeordneten Distanzelementen (3) vorgesehen sind.

6. Brandschutzeinrichtung (1) nach Anspruch 5, **dadurch gekennzeichnet, dass** die Distanzelemente (3) aus dem selben Hartschaum (11) vorgefertigt sind, der zwischen Brandschutzfolie (4) und Oberfläche der zu schützenden Einrichtung eingebracht ist.

7. Brandschutzeinrichtung (1) nach einem der Ansprüche 1 bis 6, **dadurch gekennzeichnet, dass** der Hartschaum (11) zwischen Brandschutzfolie (4) und Oberfläche der zu schützenden Einrichtung Polyurethan (PUR) oder Polyisocyanurat (PIR) ist.

8. Brandschutzeinrichtung (1) nach einem der Ansprüche 1 bis 7, **dadurch gekennzeichnet, dass** zusätzlich zumindest ein Befestigungselement (10) zur Befestigung der Außenverkleidung (8) vorgesehen ist.

9. Brandschutzeinrichtung (1) nach Anspruch 8, **dadurch gekennzeichnet, dass** das Befestigungselement (10) im Wesentlichen den Umfang der zu schützenden Einrichtung umschließt.

10. Verwendung einer Brandschutzeinrichtung (1) nach einem der Ansprüche 1 bis 9 zur Verkleidung von Einrichtungen wie Behälter, insbesondere Biertanks, Leitungen und dergleichen.

11. Verfahren zur Errichtung einer Brandschutzeinrichtung (1) insbesondere an Biertanks (2) mit den folgenden Schritten:
a. Anbringen einer Vielzahl von Distanzstücken (3) auf die Oberfläche der zu schützenden Einrichtung,
b. zumindest teilweises Umhüllen der zu schützenden Einrichtung mit zumindest einer Brandschutzfolie (4), und
c. Einbringen eines Hartschaums (11) zwischen Oberfläche der zu schützenden Einrichtung und Brandschutzfolie (4),
d. Anbringen einer zusätzlichen mechanisch stabilen Außenverkleidung (8)
**dadurch gekennzeichnet, dass** die Brandschutzfolie (4) aus einem flexiblen Trägermaterial (7), einer Aluminiumfolie als Dampfsperre (6) sowie einer Schicht (5) aus bei Hitzeeinwirkung expandierendem Graphit als Schaumbildner gefertigt ist, wobei die Schaumbildnerschicht (5) der Behälteroberfläche zugewandt angeordnet wird.

12. Verfahren nach Anspruch 11, **dadurch gekennzeichnet, dass** zumindest ein Befestigungselement (10) zur Befestigung der Außenverkleidung (8) vorgesehen ist.

13. Verfahren nach einem der Ansprüche 11 oder 12, **dadurch gekennzeichnet, dass** die Distanzstücke (3) aus einem vorgeformten Hartschaum, insbesondere aus Polyurethan (PUR) oder Polyisocyanurat (PIR) gefertigt sind und in regelmäßigen Abständen auf der Oberfläche der zu schützenden Einrichtung aufgebracht, insbesondere geklebt werden.

14. Verfahren nach einem der Ansprüche 11 bis 13, **dadurch gekennzeichnet, dass** die Außenverkleidung (8) plattenförmig aus Metall oder stabilem Kunststoff gefertigt ist, und eine erste Lage an Verkleidungsplatten (9) an der zu schützenden Einrichtung (2) angebracht wird, wobei die Verkleidung (8) an dem zumindest einen Befestigungselement (10) befestigt, insbesondere angeschraubt ist,
anschließend eine erste Schicht an Hartschaum (11), insbesondere PUR oder PIR, in den durch die Distanzstücke (3) gebildeten Zwischenraum zwischen Oberfläche der zu schützenden Einrichtung und Brandschutzfolie (4) eingebracht wird
und nachfolgend zumindest eine zweite, an die erste Reihe anschließende Lage von Verkleidungsplatten (9) angebracht werden.

## Claims

1. A fire-protection device (1) for devices such as containers (2), especially beer tanks, and conduits with a fire-protection foil (4) which are arranged to be spaced from the surface of the device to be protected , with the intermediate space being foamed between the fire-protection foil (4) and the surface of the device to be protected and additionally a mechanically stable outside lining (8) being provided, **characterised in that** the fire-protection foil (4) comprises a flexible carrier (7), a vapor barrier (6) and a layer (5) made of a material which expands under heat.

2. A fire-protection device (1) according to claim 1, **characterised in that** the carrier (7) is made of polyethylene or polyester, the vapor barrier (6) is aluminum foil and the layer (5) which expands under heat consists of expanding graphite.

3. A fire-protection device (1) according to claim 1 or 2, **characterised in that** the layer (5) expanding under the action of heat faces the surface of the device to be protected.

4. A fire-protection device (1) according to one of the claims 1 to 3, **characterised in that** at least one additional foil is provided in addition to the at least one fire-protection foil (4), which additional foil is arranged between the fire-protection foil (4) and the device to be protected.

5. A fire-protection device (1) according to one of the claims 1 to 4, **characterised in that** a plurality of spacer elements (3) substantially arranged at regular intervals is provided between the fire-protection foil (4) and the surface of the device to be protected.

6. A fire-protection device (1) according to claim 5, **characterised in that** the spacer elements (3) are prefabricated from the same rigid foam (11) which is introduced between the fire-protection foil (4) and the surface of the device to be protected.

7. A fire-protection device (1) according to one of the claims 1 to 6, **characterised in that** the rigid foam (11) between the fire-protection foil (4) and the surface of the device to be protected is polyurethane (PUR) or polyisocyanurate (PIR).

8. A fire-protection device (1) according to one of the claims 1 to 7, **characterised in that** at least one fastening element (10) is additionally provided for fastening the outside lining (8).

9. A fire-protection device (1) according to claim 8, **characterised in that** the fastening element (10) substantially encloses the circumference of the device to be protected.

10. The use of a fire-protection device (1) according to one of the claims 1 to 9 for lining devices such as containers, especially beer tanks, conduits and the like.

11. A method for setting up a fire-protection device (1) especially in beer tanks (2), comprising the following steps:
a. applying a plurality of spacer elements (3) to the surface of the device to be protected;
b. at least partly covering the device to be protected with at least one fire-protection foil (4), and
c. introducing of a rigid foam (11) between the surface of the device to be protected and the fire-protection foil (4);
d. applying an additional mechanically stable outside lining (8),
**characterised in that** the fire-protection foil (4) is made of a flexible carrier material (7), an aluminum foil as a vapor barrier (6) and a layer (5) of graphite as a foaming agent which expands under the action of heat, with the foaming-agent layer (5) being arranged to face the surface of the container.

12. A method according to claim 11, **characterised in that** at least one fastening element (10) is provided for fastening the outside lining (8).

13. A method according to one of the claims 11 or 12, **characterised in that** the spacer elements (3) are made of a preformed rigid foam, especially made of polyurethane (PUR) or polyisocyanurate (PIR), and are applied in regular intervals to the surface of the device to be protected, especially glued onto the same.

14. A method according to one of the claims 11 to 13, **characterised in that** the outside lining (8) is made in form of plates made of metal or stable plastic, and a first layer of lining plates (9) is applied to the device (2) to be protected, with the lining (8) being fastened to the at least one fastening element (10), especially screwed onto the same, and finally a first layer of rigid foam (11), especially PUR or PIR, is introduced into the intermediate space formed by the spacer elements (3) between the surface of the device to be protected and the fire-protection foil (4), and subsequently at least one second layer of lining plates (9) is attached which is adjacent to the first layer.

## Revendications

1. Installation de protection contre l'incendie (1) pour des installations telles que des réservoirs (2), notamment des réservoirs à bière ainsi que des conduites à l'aide d'un film (4) de protection contre l'incendie, qui est placé écarté sur la surface de l'installation à protéger,
* l'intervalle entre le film de protection (4) et la surface de l'installation à protéger, étant expansé avec en plus, un habillage extérieur (8) mécaniquement stable,
installation **caractérisée en ce que**
le film de protection (4) comporte un support souple (7), un pare-vapeur (6) et une couche (5) en un matériau qui s'expanse à chaud.

2. Installation de protection contre l'incendie (1) selon la revendication 1,
**caractérisée en ce que**
le support (7) est réalisé en polyéthylène ou polyester et le pare-vapeur (6) est un film d'aluminium, la couche (5) expansible à chaud étant du graphite expansé.

3. Installation de protection contre l'incendie (1) selon la revendication 1 ou 2,
**caractérisée en ce que**
la couche (5) expansible à chaud, est tournée vers la surface supérieure de l'installation à protéger.

4. Installation de protection contre l'incendie (1) selon l'une des revendications 1 à 3,
**caractérisée en ce qu'**
en plus d'au moins un film de protection (4), il est prévu au moins un autre film entre le film de protection (4) et l'installation à protéger.

5. Installation de protection contre l'incendie (1) selon l'une des revendications 1 à 4,
**caractérisée par**
un ensemble d'éléments d'écartement (3) installés de préférence à intervalle pratiquement régulier entre le film de protection (4) et la surface de l'installation à protéger.

6. Installation de protection contre l'incendie (1) selon la revendication 5,
**caractérisée en ce que**
les éléments d'écartement (3) sont préfabriqués dans la même mousse dure (11) que celle qui a été placée entre le film de protection (4) et la surface de l'installation à protéger.

7. Installation de protection contre l'incendie (1) selon l'une des revendications 1 à 6,
**caractérisée en ce que**
la mousse dure (11) entre le film de protection (4) et la surface supérieure de l'installation à protéger, est du polyuréthane (PUR) ou du polyisocyanurate (PIR).

8. Installation de protection contre l'incendie (1) selon l'une des revendications 1 à 7,
**caractérisée en qu'**
en plus, il est prévu au moins un élément de fixation (10) de l'habillage extérieur (8).

9. Installation de protection contre l'incendie (1) selon la revendication 8,
**caractérisée en ce que**
l'élément de fixation (10) entoure pour l'essentiel la périphérie de l'installation à protéger.

10. Utilisation d'une installation de protection contre l'incendie (1) selon l'une des revendications 1 à 9, pour habiller des installations telles que des réservoirs et en particulier des réservoirs à bière, des conduites ou des équipements analogues.

11. Procédé de réalisation d'une installation de protection contre l'incendie (1), notamment d'un réservoir à bière (2) comprenant les étapes suivantes :
a. appliquer un grand nombre de pièces d'écartement (3) à la surface de l'installation à protéger,
b. envelopper au moins en partie l'installation à protéger avec au moins un film de protection contre l'incendie (4), et
c. introduire une mousse dure (11) entre la surface de l'installation à protéger et le film de protection contre l'incendie (4),
d. appliquer un habillage extérieur (8) supplémentaire, mécaniquement stable,
procédé **caractérisé en ce qu'**
on réalise le film de protection contre l'incendie (4) avec un matériau de support (7), souple, un film d'aluminium comme pare-vapeur (6) ainsi qu'une couche (5) en graphite s'expansant sous l'effet de la chaleur et constituant un générateur de mousse, la couche de mousse (5) étant associée à la surface extérieure du récipient.

12. Procédé selon la revendication 11,
**caractérisé par**
au moins un élément de fixation (10) pour fixer l'habillage extérieur (8).

13. Procédé selon l'une des revendications 11 ou 12,
**caractérisé en ce que**
les pièces d'écartement (3) sont réalisées en une mousse dure préformée, notamment en polyuréthane (PUR) ou en polyisocyanurate (PIR) et elles sont appliquées à intervalle régulier à la surface de l'installation à protéger, en particulier par collage.

14. Procédé selon l'une des revendications 11 à 13,
**caractérisé en ce que**
l'habillage extérieur (8) est réalisé sous la forme de plaques en métal ou en une matière plastique stable et une première couche de plaques d'habillage (9) est appliquée sur l'installation (2) à protéger,
* l'habillage (8) étant fixé à au moins un élément de fixation (10), notamment par vissage,
* ensuite, une première couche de mousse dure (11), notamment en PUR ou en PIR est introduite dans l'espace intermédiaire formé par les pièces d'écartement (3) entre la surface de l'installation à protéger et le film de protection contre l'incendie (4), et
* ensuite, on applique au moins une seconde couche de plaques d'habillage (9) sur la première série.
